# EUROPÄISCHE PATENTSCHRIFT

(11) **EP 2 383 871 B1**
(45) Veröffentlichungstag und Bekanntmachung des Hinweises auf die Patenterteilung: **05.09.2018**
(21) Anmeldenummer: 11163798.9
(22) Anmeldetag: 27.04.2011
(51) Int. Cl.: H02K 11/00, H02K 9/22, H02K 5/15, H02K 5/22

(54) **Elektromotor mit einer in einem Motorgehäuse eingeschlossenen Steuereinheit**
Electric motor with a control device enclosed in a motor housing
Moteur électrique doté d'une unité de commande enfermée dans un boîtier de moteur

(30) Priorität: 28.04.2010 DE 102010028336
(43) Veröffentlichungstag der Anmeldung: 02.11.2011
(73) Patentinhaber: Robert Bosch GmbH, 70442 Stuttgart (DE)
(72) Erfinder: Braun, Sigmund, 72127, Kusterdingen (DE)

(56) Entgegenhaltungen:
- DE-A1- 3 823 404
- DE-A1- 3 842 588
- DE-A1- 4 231 784
- DE-A1-102006 026 403
- JP-A- 2008 011 661
- US-A- 5 444 315
- US-A1- 2003 230 945

## Beschreibung

### Stand der Technik

Die Erfindung betrifft einen Elektromotor, insbesondere einen elektronisch kommutierten Elektromotor. Der Elektromotor weist einen Stator und einen insbesondere permanentmagnetisch ausgebildeten Rotor auf. Der Rotor ist mit einer sich entlang einer Motorwellenlängsachse erstreckenden Motorwelle verbunden ist und um die Motorwellenlängsachse drehbar gelagert. Die Motorwelle ist abtriebsseitig zum formschlüssigen und/oder kraftschlüssigen Abgeben eines Drehmoments ausgebildet. Der Elektromotor weist auch ein Gehäuse auf, wobei der Stator wenigstens teilweise in dem Gehäuse angeordnet und mit dem Gehäuse verbunden ist. Der Elektromotor weist auch eine Steuereinheit auf, wobei die Steuereinheit mit dem Stator verbunden und ausgebildet ist, den Stator zum Erzeugen eines magnetischen Drehfeldes zu bestromen.

Aus dem Stand der Technik sind Elektromotoren bekannt, bei denen eine Steuereinheit, welche mit dem Stator verbunden ist und diesen ansteuert, rückseitig angeordnet ist und so beispielsweise mittels eines Lüfterrades, welches mit der Motorwelle verbunden ist, gekühlt werden kann. Die Druckschrift DE 42 31 784 A1 zeigt einen Elektromotor gemäß dem Oberbegriff des Anspruchs 1.

### Offenbarung der Erfindung

Erfindungsgemäß weist der Elektromotor ein mit dem Gehäuse verbundenes Lagerelement auf, wobei das Lagerelement mit einem abtriebsseitigen Motorwellenlager verbunden ist. Die Steuereinheit ist mit dem Lagerelement derart verbunden, dass eine von der Steuereinheit erzeugte Wärme an das Lagerelement abgegeben werden kann. Die Steuereinheit ist entlang einer Rotorwellenlängsachse zwischen dem Lagerelement, bevorzugt zwischen dem abtriebsseitigen Motorwellenlager und dem Rotor angeordnet. Vorteilhaft kann der Elektromotor dadurch eine besonders kompakte Bauweise aufweisen. Weiter vorteilhaft kann der Elektromotor ein geschlossenes Gehäuse aufweisen, welches keine Lüftungsschlitze aufweist.

Bevorzugt ist das Lagerelement ausgebildet, den Elektromotor, insbesondere das Gehäuse, zu verschließen. Weiter bevorzugt bildet das Lagerelement so eine Wand des Gehäuses.

In einer bevorzugten Ausführungsform ist das Lagerelement durch einen Anschlussflansch gebildet, wobei der Anschlussflansch ausgebildet ist, den Elektromotor - beispielsweise mit einem Getriebe oder einem anderen Teil - haltend zu verbinden. Dazu kann der Anschlussflansch ein Gewinde oder wenigstens eine Halterung aufweisen, welche zum Verbinden, insbesondere zum Befestigen des Elektromotors ausgebildet ist.

In einer bevorzugten Ausführungsform des Elektromotors weist die Steuereinheit wenigstens einen Halbleiterschalter auf, wobei der Halbleiterschalter mit dem Lagerelement, insbesondere dem Anschlussflansch, wärmeleitfähig verbunden ist. Dadurch kann vorteilhaft eine im Halbleiterschalter erzeugte Verlustwärme an den Anschlussflansch, und über den Anschlussflansch beispielsweise an ein wärmeleitfähiges Bauteil, beispielsweise ein Getriebe, abgeführt werden, mit welchem der Elektromotor haltend verbunden ist.

In einer anderen Ausführungsform kann das Lagerelement, insbesondere der Anschlussflansch, Kühlrippen aufweisen, welche ausgebildet sind, Wärme mittels Konvektion abzuführen.

Das Lagerelement weist bevorzugt Aluminium auf, weiter bevorzugt ist das Lagerelement mittels eines Gussverfahrens hergestellt.

In einer bevorzugten Ausführungsform weist der Elektromotor wenigstens ein Gegenlager auf, wobei das Gegenlager mit einem Endabschnitt der Motorwelle und mit dem Gehäuse verbunden ist. Weiter bevorzugt ist das Gegenlager mit dem Endabschnitt der Motorwelle und mit dem Gehäuse verbunden, so dass der Endabschnitt in dem Gehäuse drehbar gelagert ist.

Vorteilhaft kann das Gehäuse so einen zweiten Lagerpunkt bilden, wobei das Lagerelement, insbesondere der vorab erwähnte Anschlussflansch, einen ersten Lagerpunkt für die Motorwelle bildet.

In einer bevorzugten Ausführungsform des Elektromotors ist das Gehäuse mit dem Lagerelement trennbar verbunden. Weiter bevorzugt ist das Gehäuse im Bereich eines Gehäuserandes mit dem Lagerelement trennbar verbunden.

In einer bevorzugten Ausführungsform weist das Lagerelement eine Ausnehmung auf, wobei die Ausnehmung das Motorwellenlager, insbesondere einen Außenring des Motorwellenlagers, drehfest wenigstens teilweise aufnehmen kann. So kann vorteilhaft ein Abschnitt der Motorwelle abtriebsseitig in dem Lagerelement drehbar gelagert sein. Weiter bevorzugt ist der Außenring in der Ausnehmung insbesondere drehfest angeordnet.

In einer bevorzugten Ausführungsform des Elektromotors schließt das Gehäuse mit dem Lagerelement oder mit dem Anschlussflansch, insbesondere dicht ab. Weiter bevorzugt umschließt das Gehäuse zusammen mit dem Lagerelement oder zusammen mit dem Anschlussflansch die Steuereinheit, den Stator und den Rotor. So kann von dem Gehäuse und wenigstens dem Anschlussflansch oder dem Lagerelement vorteilhaft ein Hohlraum gebildet sein, in dem der Stator, der Rotor und die Steuereinheit angeordnet sind.

Die Steuereinheit kann so vorteilhaft vor Verschmutzung oder Beschädigung geschützt sein. Weiter vorteilhaft kann eine von der Steuereinheit erzeugte Wärme auch bei einem hermetisch abgeschlossenen Gehäuse mindestens mittelbar an eine Umgebung abgegeben werden. Erfindungsgemäß weist der Elektromotor einen Dichtungsrahmen auf. Der Dichtungsrahmen ist zwischen einem Gehäuserand des Gehäuses und dem Lagerelement beziehungsweise dem Anschlussflansch angeordnet. Der Dichtungsrahmen ist bevorzugt aus einem Kunststoff gebildet, insbesondere Polyethylen, Polypropylen, Polyacryl, Polycarbonat oder Polyamid.

Der Dichtungsrahmen ist bevorzugt ausgebildet, - insbesondere mit einer ersten Fläche -, gegen den Gehäuserand und - insbesondere mit einer zweiten Fläche - , gegen das Lagerelement beziehungsweise den Anschlussflansch abzudichten. Die erste und die zweite Fläche weisen bevorzugt voneinander ab. Der Dichtungsrahmen weist bevorzugt nach außen weisende elektrische Kontakte auf, die jeweils mit der Steuereinheit verbunden sind, so dass die Steuereinheit außerhalb des Gehäuses über die Kontakte elektrisch, insbesondere trennbar, verbunden werden kann.

Die Steuereinheit ist bevorzugt auf einem insbesondere flach ausgebildeten Schaltungsträger angeordnet. Der Schaltungsträger ist bevorzugt eine insbesondere faserverstärkte Leiterplatte oder ein Schaltungsträger mit wenigstens einer keramisch ausgebildeten Trägerschicht und wenigstens einer elektrisch leitfähigen Kontaktschicht. Die Kontaktschicht ist bevorzugt ein Kupferblech.

Weiter bevorzugt weist der Dichtungsrahmen wenigstens eine Halterung auf, welche ausgebildet ist, den Schaltungsträger, insbesondere die Leiterplatte oder auf der Leiterplatte angeordnete Komponenten, beispielsweise ein elektronisches Bauteil wie einen Kondensator, zu halten und so eine elektrische Verbindung zwischen dem elektronischen Bauteil und der Leiterplatte vor Beschädigung durch Vibrationen zu schützen.

Der Dichtungsrahmen ist bevorzugt wenigstens umfangsabschnittsweise ringförmig ausgebildet. Weiter bevorzugt weist der Dichtungsrahmen wenigstens ein insbesondere elastisch ausgebildetes Dichtmittel auf. Das Dichtmittel ist bevorzugt wenigstens abschnittsweise ringförmig ausgebildet.

Weiter bevorzugt folgt eine das Dichtmittel entlang seiner Längserstreckung einer Kontur des Dichtungsrahmens.

Die Steuereinheit ist bevorzugt auf dem insbesondere flach ausgebildeten Schaltungsträger, insbesondere auf einer Leiterplatte angeordnet, wobei sich eine Schaltungsträgerebene des Schaltungsträgers quer zur Motorwellenlängsachse erstreckt. Die Steuereinheit kann so besonders platzsparend in dem Hohlraum angeordnet sein. Die Leiterplatte weist beispielsweise einen Durchbruch oder eine Ausnehmung auf, wobei sich die Motorwelle durch die Ausnehmung beziehungsweise den Durchbruch hindurch erstreckt.

In einer bevorzugten Ausführungsform weist das Lagerelement wenigstens ein Zentriermittel auf, welches ausgebildet ist, das Gehäuse bevorzugt an einer Innenwand zu stützen und in einer vorbestimmten Stellung relativ zum Lagerelement zu halten. Die Zentriermittel sind beispielsweise durch einen Zentrierbund oder wenigstens einen Zentriersteg gebildet, welcher - bevorzugt in Richtung einer Motorwellenlängsachse - in den Hohlraum hineinragt. Dadurch kann die Motorwellenlängsachse zusammen mit den Rotationsachsen des Gegenlagers und des Motorlagers des Lagerelements koaxial verlaufen.

Das Zentriermittel ist weiter bevorzugt an das Lagerelement angeformt. Dadurch kann das Zentriermittel vorteilhaft zusammen mit dem Lagerelement ein einem Gussverfahren hergestellt werden.

Die Erfindung betrifft auch eine Fahrzeuglenkung für ein Kraftfahrzeug mit dem vorab beschriebenen Elektromotor. Die Fahrzeuglenkung ist ausgebildet, ein Lenken eines Fahrzeugs mit der Fahrzeuglenkung mittels des Elektromotors zu unterstützen, insbesondere zu erleichtern.

Der Elektromotor ist beispielsweise eine Synchronmaschine, eine Asynchronmaschine oder eine - bevorzugt mittels einer Steuereinheit geregelte - Gleichstrommaschine.

Die Erfindung wird nun im Folgenden anhand von Figuren und weiteren Ausführungsbeispielen beschrieben. Weitere vorteilhafte Ausführungsformen ergeben sich aus den in den Figuren beschriebenen Merkmalen, sowie aus den in den abhängigen Ansprüchen beschriebenen Merkmalen.

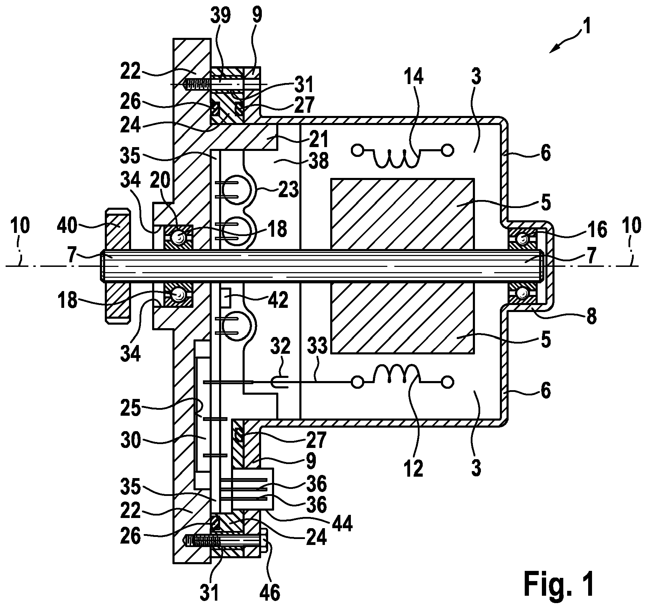

Figur 1 zeigt schematisch ein Ausführungsbeispiel für einen Elektromotor, bei dem eine Steuereinheit entlang einer Rotorwellenlängsachse zwischen einem abtriebsseitigen Anschlussflansch und einem Rotor angeordnet ist, wobei die Steuereinheit, der Rotor und ein Stator des Elektromotors von einem Gehäuse umschlossen sind.

Figur 1 zeigt - schematisch - ein Ausführungsbeispiel für einen Elektromotor 1 in einer Schnittdarstellung. Der Elektromotor 1 weist einen Stator 3 auf. Der Stator 3 weist mehrere Statorspulen auf, von denen in diesem Ausführungsbeispiel die Statorspulen 12 und 14 beispielhaft dargestellt sind. Der Elektromotor 1 weist auch einen Rotor 5 auf, welcher in diesem Ausführungsbeispiel permanentmagnetisch ausgebildet ist. Der Elektromotor 1 weist auch ein Gehäuse 6 auf, welches in diesem Ausführungsbeispiel als Stahltopf ausgebildet ist.

Das Gehäuse 6 nimmt in diesem Ausführungsbeispiel den Stator 3 und den Rotor 5 vollständig auf. Das Gehäuse 6 ist in diesem Ausführungsbeispiel als zylinderförmiger Stahltopf mit einem Boden und einer Öffnung ausgebildet, wobei der Boden eine Lagerbuchse, in diesem Ausführungsbeispiel einen nach außen ausgeformten Becher 8 aufweist. Der nach außen ausgeformte Becher 8 ist zum Aufnehmen eines Lagers 16 ausgebildet. Der Anschlussflansch 22 bildet eine Verschlusswand des Gehäuses und ist ausgebildet, die Öffnung des Gehäuses zu verschließen. Zusammen mit dem Gehäuse 6 umschließt der Anschlussflansch 22 einen Hohlraum 38.

Der Elektromotor 1 weist auch ein als Anschlussflansch 22 ausgebildetes Lagerelement auf. Der Anschlussflansch 22 ist zum Verbinden des Elektromotors 1 mit einem Getriebe oder mit einer Lenkvorrichtung für ein Kraftfahrzeug ausgebildet. Der Anschlussflansch 22 weist eine Ausnehmung 34 für ein Rotorlager 18 auf. Die Motorwelle 7 ist in dem Rotorlager 18 abtriebsseitig drehbar gelagert. Die Rotorwelle 7 weist abtriebsseitig ein Antriebsrad 40 auf. Das Antriebsrad 40 ist zum Wirkeingriff mit einem Getriebe, insbesondere einem Lenkgetriebe einer Servolenkung ausgebildet. Das Rotorlager 18 weist einen Außenring 29 auf, welcher mit dem Anschlussflansch 22 drehfest verbunden, beispielsweise in den Anschlussflansch 22 eingepresst ist.

Der Elektromotor 1 weist auch einen Dichtungsrahmen 24 auf. Der Dichtungsrahmen 24 ist entlang einer Motorwellenlängsachse 10 zwischen dem Anschlussflansch 22 und dem Rotor 5 angeordnet.

Der Elektromotor 1 weist auch eine in dem Hohlraum 38 angeordnete Steuereinheit auf, welche auf einem Schaltungsträger, insbesondere einer Leiterplatte 35 angeordnet ist. Die Leiterplatte 35 weist in diesem Ausführungsbeispiel einen Durchbruch auf, wobei die Motorwelle durch den Durchbruch hindurch verläuft. Die Steuereinheit weist einen Halbleiterschalter 30 auf. Der Halbleiterschalter 30 ist mit der Leiterplatte 35 verbunden und berührt mit einer zum Abführen von Verlustwärme ausgebildeten Oberfläche den Anschlussflansch 22. Der Anschlussflansch 22 weist dazu eine Ausnehmung 25 mit einer Kontaktfläche auf, welche zum Berühren mit der Oberfläche des Halbleiterschalters 30 ausgebildet ist.

Der Halbleiterschalter 30 ist ausgangsseitig mittels einer Steckverbindung 32 mit einem Anschluss 33 der Statorspule 12 verbunden.

Die Steuereinheit, insbesondere ein Mikroprozessor 42 der Steuereinheit, ist ausgebildet, die Leistungsendstufe, insbesondere den Halbleiterschalter 30 derart anzusteuern, dass mittels des Halbleiterschalters 30 die Statorspulen 12, 14 - und im Falle eines Mehrphasen-Motors mit wenigstens einer in diesem Ausführungsbeispiel nicht dargestellten weiteren Statorspule - des Stators 3 zum Erzeugen eines magnetischen Drehfelds bestromt werden können.

Der Dichtungsrahmen 24 weist wenigstens einen Durchbruch, insbesondere eine durchgehende Bohrung 39 auf. Das Gehäuse 6 weist im Bereich der Öffnung einen abgewinkelten Rand 9 auf. Der Rand 9 weist eine entsprechend zur durchgehenden Bohrung 39 passende Bohrung auf, sodass das Gehäuse 6 im Bereich des Randes 9 mittels einer Schraube 46 durch den Dichtungsrahmen 24 hindurch mit dem Anschlussflansch 22 verbunden werden kann. Der Dichtungsrahmen 24 weist in diesem Ausführungsbeispiel eine die Bohrung 39 axial umschließende Abstandshülse 31 auf, welche beim Festdrehen der Schraube 46 das Gehäuse 6 auf eine Längsabmessung der Abstandshülse 31 mit dem Anschlussflansch 22 beabstandet hält, so dass das Gehäuse um die Motorwellenlängsachse 10 zentriert ist.

Der Anschlussflansch 22 des Elektromotors 1 weist dazu auch wenigstens ein Zentriermittel in Form eines einen Zentrierbundes 21 auf, welcher radial um die Motorwellenlängsachse 10 umlaufend aus dem Anschlussflansch in das Gehäuse 6 hineinragt und das Gehäuse - insbesondere eine räumliche Ausrichtung des Gehäuses - in Bezug auf die Motorwellenlängsachse 10 in einer vorbestimmten Stellung hält. Die Zentriermittel können auch durch Stege gebildet sein, welche angeordnet sind, das Gehäuse 6 im Bereich des Gehäuserandes wenigstens abschnittsweise entlang eines Gehäuseumfangs von innen zu stützen.

Der Dichtungsrahmen 24 weist zwei umlaufende, insbesondere elastisch ausgebildete Dichtungen 26 und 27 auf. Die Dichtung 26 ist zum Abdichten des Dichtungsrahmens 24 mit dem Anschlussflansch 22 ausgebildet. Die Dichtung 27 ist zum Abdichten des Dichtungsrahmens 24 mit dem Gehäuse 6, insbesondere mit dem abgewinkelten Rand 9 des Gehäuses 6 ausgebildet. Die Dichtungen 26 und 27 sind beispielsweise aus Silikonkautschuk gebildet.

Der Dichtungsrahmen 24 weist auch eine Anschlussbuchse 44 auf. Die Anschlussbuchse 44 weist nach außen weisende elektrische Kontakte 36 auf, welche mit der Steuereinheit, insbesondere der Leiterplatte 35 verbunden sind. Die Leiterplatte 35 weist beispielsweise Epoxidharz oder Phenolharz auf und ist bevorzugt faserverstärkt, insbesondere Glasfaserverstärkt. Anstelle einer faserverstärkten Leiterplatte kann die Steuereinheit einen keramischen Schaltungsträger aufweisen, welcher wenigstens eine elektrisch leitfähige Schicht und wenigstens eine elektrisch isolierende keramische Trägerschicht aufweist.

Der Dichtungsrahmen 24 weist auch eine Halterung 23 auf, welche ausgebildet ist, elektronische Bauelemente der Leiterplatte 35, in diesem Ausführungsbeispiel Kondensatoren, zu halten.

Die Steuereinheit, welche auf der Leiterplatte 35 angeordnet ist, ist so vollständig vor Feuchtigkeit, Beschädigung oder Verschmutzung geschützt. Weiter vorteilhaft kann eine Verlustwärme, welche in Leistungsbauelementen der Steuereinheit erzeugt wird, vorteilhaft an den Anschlussflansch 22 abgegeben werden. Der Anschlussflansch 22 ist dazu beispielsweise aus Metall, insbesondere aus massivem Aluminium ausgebildet. Der Anschlussflansch 22 weist dazu eine Ausnehmung 25 auf, in welche die Leistungsendstufe 30 hineinragt und den Anschlussflansch 22 wärmeleitfähig kontaktiert.

## Patentansprüche

1. Elektromotor (1) mit einem Stator (3) und einem Rotor (5), wobei der Rotor (5) mit einer sich entlang einer Motorwellenlängsachse (10) erstreckenden Motorwelle (7) verbunden ist und um die Motorwellenlängsachse (10) drehbar gelagert ist, wobei die Motorwelle (7) abtriebsseitig zum formschlüssigen und/oder kraftschlüssigen Abgeben (40) eines Drehmoments ausgebildet ist, und der Elektromotor (1) ein Gehäuse (6) aufweist, wobei der Stator (3) wenigstens teilweise in dem Gehäuse (6) angeordnet ist, und der Elektromotor (1) eine Steuereinheit (30, 35, 42) aufweist, welche ausgebildet ist, den Stator (3) zum Erzeugen eines magnetischen Drehfeldes zu bestromen, wobei die Motorwelle (7) abtriebsseitig mit wenigstens einem abtriebsseitigen Motorwellenlager (18) drehbar gelagert ist, und der Elektromotor (1) ein mit dem Gehäuse (6) verbundenes Lagerelement (22) aufweist, welches mit dem abtriebsseitigen Motorwellenlager (18) verbunden ist, wobei die Steuereinheit (30, 35, 42) mit dem Lagerelement (22) derart verbunden ist, dass eine von der Steuereinheit (30, 35, 42) erzeugte Wärme an das Lagerelement (22) abgegeben werden kann, und die Steuereinheit (30, 35, 42) entlang der Motorwellenlängsachse (10) zwischen dem Lagerelement (22) und dem Rotor (5) angeordnet ist, **dadurch gekennzeichnet, dass** ein Dichtungsrahmen (24) zwischen einem Gehäuserand (9) des Gehäuses (6) und dem Lagerelement (22) angeordnet ist, welcher ausgebildet ist, gegen den Gehäuserand (9) und gegen das Lagerelement (22) abzudichten und der Dichtungsrahmen nach aussen weisende elektrische Kontakte (36) aufweist, die jeweils mit der Steuereinheit (30, 35, 42) verbunden sind, so dass die Steuereinheit (30, 35, 42) ausserhalb des Gehäuses (6) über die Kontakte (36), insbesondere trennbar, elektrisch verbunden werden kann.

2. Elektromotor (2) nach Anspruch 1,
**dadurch gekennzeichnet, dass**
das Lagerelement (22) durch einen Anschlussflansch (22) gebildet ist, wobei der Anschlussflansch (22) ausgebildet ist, den Elektromotor (1) haltend zu verbinden.

3. Elektromotor (1) nach Anspruch 1 oder 2,
**dadurch gekennzeichnet, dass**
die Steuereinheit (30, 35, 42) wenigstens einen Halbleiterschalter (30) aufweist, der mit dem Lagerelement (22) wärmeleitfähig verbunden ist.

4. Elektromotor (1) nach einem der vorhergehenden Ansprüche,
**dadurch gekennzeichnet, dass**
der Elektromotor (1) wenigstens ein Gegenlager (16) aufweist, das mit einem Endabschnitt der Motorwelle (7) und mit dem Gehäuse (6, 8) verbunden ist, so dass der Endabschnitt der Motorwelle (7) in dem Gehäuse (6, 8) drehbar gelagert ist.

5. Elektromotor (1) nach einem der vorhergehenden Ansprüche,
**dadurch gekennzeichnet, dass**
das Gehäuse (6) mit dem Lagerelement (22) trennbar verbunden ist.

6. Elektromotor (1) nach einem der vorhergehenden Ansprüche,
**dadurch gekennzeichnet, dass**
das Lagerelement (22) eine Ausnehmung (34) aufweist, die das Motorwellenlager (18), insbesondere einen Aussenring (20) des Motorwellenlagers (18), drehfest wenigstens teilweise aufnehmen kann.

7. Elektromotor (1) nach einem der vorhergehenden Ansprüche,
**dadurch gekennzeichnet, dass**
das Lagerelement (22) wenigstens zusammen mit dem Gehäuse (6) einen Hohlraum (38) umschließt, in dem der Stator (3), der Rotor (5) und die Steuereinheit (30, 35, 42) angeordnet sind.

8. Elektromotor (1) nach einem der vorhergehenden Ansprüche,
**dadurch gekennzeichnet, dass**
der Dichtungsrahmen (24) wenigstens ein insbesondere elastisch ausgebildetes Dichtmittel (26, 27) aufweist.

9. Elektromotor (1) nach einem der vorhergehenden Ansprüche,
**dadurch gekennzeichnet, dass**
die Steuereinheit (30, 42) auf einem insbesondere flach ausgebildeten Schaltungsträger (35) angeordnet ist, wobei sich eine Schaltungsträgerebene des Schaltungsträgers (35) quer zur Motorwellenlängsachse (10) erstreckt.

10. Elektromotor (1) nach einem der vorhergehenden Ansprüche,
**dadurch gekennzeichnet, dass**
das Lagerelement wenigstens ein Zentriermittel (31, 21) aufweist, welches ausgebildet ist, das Gehäuse (6) an einer Innenwand zu stützen und in einer vorbestimmten Stellung relativ zum Lagerelement (22) zu halten.

## Claims

1. Electric motor (1) comprising a stator (3) and a rotor (5), wherein the rotor (5) is connected to a motor shaft (7), which extends along a motor shaft longitudinal axis (10), and is rotatably mounted about the motor shaft longitudinal axis (10), wherein the motor shaft (7), on the output side, is designed to output (40) a torque in an interlocking and/or force-fitting manner, and the electric motor (1) has a housing (6), wherein the stator (3) is arranged at least partially in the housing (6), and the electric motor (1) has a control unit (30, 35, 42) which is designed to energize the stator (3) for the purpose of generating a rotating magnetic field, wherein the motor shaft (7), on the output side, is rotatably mounted by at least one output-side motor shaft bearing (18), and the electric motor (1) has a bearing element (22) which is connected to the housing (6) and is connected to the output-side motor shaft bearing (18), wherein the control unit (30, 35, 42) is connected to the bearing element (22) in such a way that heat which is generated by the control unit (30, 35, 42) can be given off to the bearing element (22), and the control unit (30, 35, 42) is arranged between the bearing element (22) and the rotor (5) along the motor shaft longitudinal axis (10), **characterized in that** a seal frame (24) is arranged between a housing edge (9) of the housing (6) and the bearing element (22), which seal frame is designed to seal off with respect to the housing edge (9) and with respect to the bearing element (22) and the seal frame has electrical contacts (36) which face outwards and are each connected to the control unit (30, 35, 42), so that the control unit (30, 35, 42) can be electrically connected, in particular in a detachable manner, by means of the contacts (36) outside the housing (6).

2. Electric motor (2) according to Claim 1, **characterized in that** the bearing element (22) is formed by a connection flange (22), wherein the connection flange (22) is designed to connect the electric motor (1) in a holding manner.

3. Electric motor (1) according to Claim 1 or 2, **characterized in that** the control unit (30, 35, 42) has at least one semiconductor switch (30) which is connected to the bearing element (22) in a heat-conducting manner.

4. Electric motor (1) according to one of the preceding claims, **characterized in that** the electric motor (1) has at least one mating bearing (16) which is connected to an end section of the motor shaft (7) and to the housing (6, 8), so that the end section of the motor shaft (7) is rotatably mounted in the housing (6, 8).

5. Electric motor (1) according to one of the preceding claims, **characterized in that** the housing (6) is connected to the bearing element (22) in a detachable manner.

6. Electric motor (1) according to one of the preceding claims, **characterized in that** the bearing element (22) has a recess (34) which can at least partially accommodate the motor shaft bearing (18), in particular an outer ring (20) of the motor shaft bearing (18), in a rotationally fixed manner.

7. Electric motor (1) according to one of the preceding claims, **characterized in that** the bearing element (22) encloses a cavity (38) at least together with the housing (6), the stator (3), the rotor (5) and the control unit (30, 35, 42) being arranged in the said cavity.

8. Electric motor (1) according to one of the preceding claims, **characterized in that** the seal frame (24) has at least one sealing means (26, 27), which is of elastic design in particular.

9. Electric motor (1) according to one of the preceding claims, **characterized in that** the control unit (30, 42) is arranged on a circuit carrier (35), which is of flat design in particular, wherein a circuit carrier plane of the circuit carrier (35) extends transversely in relation to the motor shaft longitudinal axis (10).

10. Electric motor (1) according to one of the preceding claims, **characterized in that** the bearing element has at least one centring means (31, 21) which is designed to support the housing (6) on an inner wall and to hold the said housing in a predetermined position relative to the bearing element (22).

## Revendications

1. Moteur électrique (1), comprenant un stator (3) et un rotor (5), le rotor (5) étant relié à un arbre de moteur (7) qui s'étend le long d'un axe longitudinal d'arbre de moteur (10) et étant monté rotatif autour de l'axe longitudinal d'arbre de moteur (10), l'arbre de moteur (7) étant configuré du côté mené pour délivrer (40) un couple par complémentarité de formes et/ou par assemblage de force et le moteur électrique (1) possédant un carter (6), le stator (3) étant au moins partiellement disposé dans le carter (6), et le moteur électrique (1) possédant une unité de commande (30, 35, 42) qui est configurée pour alimenter électriquement le stator (3) en vue de générer un champ tournant magnétique,
l'arbre de moteur (7) étant monté rotatif du côté mené avec au moins un palier d'arbre de moteur (18) côté mené, et le moteur électrique (1) possédant un élément support (22) relié au carter (6) qui est relié au palier d'arbre de moteur (18) côté mené, l'unité de commande (30, 35, 42) étant reliée à l'élément support (22) de telle sorte qu'une chaleur générée par l'unité de commande (30, 35, 42) peut être délivrée à l'élément support (22), et l'unité de commande (30, 35, 42) étant disposée le long de l'axe longitudinal d'arbre de moteur (10) entre l'élément support (22) et le rotor (5),
**caractérisé en ce que**
un cadre d'étanchéité (24) est disposé entre un bord de carter (9) du carter (6) et l'élément support (22), lequel est configuré pour réaliser l'étanchéité par rapport au bord de carter (9) et par rapport à l'élément support (22) et le cadre d'étanchéité possède des contacts électriques (36) orientés vers l'extérieur qui sont respectivement reliés à l'unité de commande (30, 35, 42), de sorte que l'unité de commande (30, 35, 42) peut être branchée électriquement, notamment de manière amovible, à l'extérieur du carter (6) par le biais des contacts (36).

2. Moteur électrique (2) selon la revendication 1, **caractérisé en ce que** l'élément support (22) est formé par une bride de raccordement (22), la bride de raccordement (22) étant configurée pour relier le moteur électrique (1) avec maintien.

3. Moteur électrique (1) selon la revendication 1 ou 2, **caractérisé en ce que** l'unité de commande (30, 35, 42) possède au moins un commutateur à semiconducteur (30) qui est relié avec conduction thermique à l'élément support (22).

4. Moteur électrique (1) selon l'une des revendications précédentes, **caractérisé en ce que** le moteur électrique (1) possède au moins un palier-support (16) qui est relié à une portion d'extrémité de l'arbre de moteur (7) et au carter (6, 8), de sorte que la portion d'extrémité de l'arbre de moteur (7) soit montée rotative dans le carter (6, 8).

5. Moteur électrique (1) selon l'une des revendications précédentes, **caractérisé en ce que** le carter (6) est relié de manière amovible à l'élément support (22).

6. Moteur électrique (1) selon l'une des revendications précédentes, **caractérisé en ce que** l'élément support (22) possède une cavité (34) qui peut accueillir au moins partiellement et en rotation solidaire le palier d'arbre de moteur (18), notamment une bague extérieure (20) du palier d'arbre de moteur (18) .

7. Moteur électrique (1) selon l'une des revendications précédentes, **caractérisé en ce que** l'élément support (22), au moins conjointement avec le carter (6), entoure un espace creux (38) dans lequel sont disposés le stator (3), le rotor (5) et l'unité de commande (30, 35, 42).

8. Moteur électrique (1) selon l'une des revendications précédentes, **caractérisé en ce que** le cadre d'étanchéité (24) possède au moins un moyen d'étanchéité (26, 27), notamment de configuration élastique.

9. Moteur électrique (1) selon l'une des revendications précédentes, **caractérisé en ce que** l'unité de commande (30, 42) est disposée sur un porte-circuit (35), notamment de configuration plane, un plan de porte-circuit du porte-circuit (35) s'étendant transversalement par rapport à l'axe longitudinal d'arbre de moteur (10).

10. Moteur électrique (1) selon l'une des revendications précédentes, **caractérisé en ce que** l'élément support possède au moins un moyen de centrage (31, 21) qui est configuré pour soutenir le carter (6) au niveau d'une paroi interne et le maintenir dans une position prédéfinie par rapport à l'élément support (22).
